# EUROPÄISCHE PATENTSCHRIFT

(11) **EP 3 669 527 B1**
(45) Veröffentlichungstag und Bekanntmachung des Hinweises auf die Patenterteilung: **21.07.2021**
(21) Anmeldenummer: 18755783.0
(22) Anmeldetag: 13.08.2018
(51) Int. Cl.: H04L 29/08, H04L 12/40, H04L 12/10

(54) **VERFAHREN ZUM BETREIBEN EINER SENSORANORDNUNG IN EINEM KRAFTFAHRZEUG AUF BASIS EINES DSI-PROTOKOLLS**
METHOD FOR OPERATING A SENSOR ARRANGEMENT IN A MOTOR VEHICLE ON THE BASIS OF A DSI PROTOCOL
PROCÉDÉ DE FONCTIONNEMENT D'UN AGENCEMENT DE CAPTEURS DANS UN VÉHICULE AUTOMOBILE SUR LA BASE D'UN PROTOCOLE DSI

(30) Priorität: 15.08.2017 DE 102017118574
(43) Veröffentlichungstag der Anmeldung: 24.06.2020
(73) Patentinhaber: Valeo Schalter und Sensoren GmbH, 74321 Bietigheim-Bissingen (DE)
(72) Erfinder: LEWANDOWSKI, Marek, 74321 Bietigheim-Bissingen (DE)
(74) Vertreter: Enge, Sebastian
(86) Internationale Anmeldenummer: PCT/EP2018/071867
(87) Internationale Veröffentlichungsnummer: WO 2019/034579

(56) Entgegenhaltungen:
- WO-A1-2016/206921
- DE-A1-102010 002 679
- DE-A1-102014 113 456
- Anonymous: "DSI3 Bus Standard", , 16. Februar 2011 (2011-02-16), Seiten 1-45, XP055510946, Gefunden im Internet: URL:https://www.dsiconsortium.org/download s/DSI3_%20Bus_Standard_r1.00.pdf [gefunden am 2018-09-28]

## Beschreibung

Die Erfindung betrifft ein Verfahren zum Betreiben einer Sensoranordnung in einem Kraftfahrzeug auf Basis eines DSI-Protokolls, wobei die Sensoranordnung eine Zentraleinheit als Master und eine Mehrzahl von Sensoreinheiten als von dem Master gesteuerte Slaves aufweist, die Zentraleinheit und die Sensoreinheiten an eine Busleitung angeschlossen sind und über die Busleitung eine Kommunikation zwischen der Zentraleinheit und den Sensoreinheiten erfolgt. Die Erfindung betrifft ferner die Verwendung eines solchen Verfahrens in einem Kraftfahrzeug sowie eine Sensoranordnung.

Das DSI-Protokoll Distributed System Interface, siehe: DSI3 Bus Standard, Revision 1.00 vom 16. Februar 2011, dessen Spezifikation hiermit durch explizite Einbeziehung zum Teil der Offenbarung der vorliegenden Erfindung gemacht wird, ist ein Protokoll, das es gestattet, auf Basis einer einfachen Zweidraht-Verkabelung ein Sensor-Netzwerk aufzubauen, in dem ein Master mit einem oder mehreren Slaves über eine Busleitung kommuniziert. Das DSI-Protokoll richtet sich dabei primär auf die Verwendung in Kraftfahrzeugen, um mittels des Masters eine Mehrzahl von Slaves, insbesondere Sensoren und Aktoren, abzufragen und/oder anzusteuern.

Die Spezifikation des DSI-Protokolls sieht dabei vor, dass eine solche Sensoranordnung in einer von zwei Betriebsklassen betrieben werden kann, und zwar einerseits in der "Signal Function Class", andererseits in der "Power Function Class". Das Protokoll sieht weiterhin grundsätzlich drei unterschiedliche Typen der Nutzung des Busses zwischen dem Master und den Slaves vor:
Im CRM-Modus (Command and Response Modus) findet eine bidirektionale Kommunikation zwischen dem Master und den Slaves statt. Der Master sendet ein Kommando (Command), auf das die Slaves antworten (Response). Dieses Verfahren wird beispielsweise verwendet, um die Slaves zu konfigurieren oder um bestimmte Werte gezielt von einem Slave abzufragen.

Im PDCM-Modus (Periodic Data Collection Mode) übertragen die Slaves vergleichsweise große Datenmengen innerhalb eines vorgegebenen Zeitschlitzes an den Master, wobei die Sendetätigkeit des Masters sich darauf beschränkt, durch ein Synchronisierungssignal (Broadcast Read Command) den Slaves einen Bezugspunkt zur Bestimmung dieses Zeitschlitzes zur Verfügung zu stellen. Die Slaves sind bereits zuvor mit Informationen zu ihrem jeweiligen Zeitschlitz ausgestattet worden, so dass sie in Reaktion auf das Synchronisierungssignal ihr jeweiliges Sendezeitintervall bestimmen und auf Basis dessen ihre Sensordaten an den Master senden können.

In der Power-Phase findet die Übertragung von vergleichsweise großen Mengen elektrischer Energie statt, um die Slaves mit hohem Energiebedarf mit ausreichend Energie zu versorgen.

Die oben genannte Signal Function Class gemäß der oben genannten Spezifikation dient primär der Anbindung von Slaves mit geringem Energiebedarf und vergleichsweise hohem Datenaufkommen, das von dem Slave zum Master zu senden ist. Nach Inbetriebnahme einer Sensoranordnung der Signal Function Class findet zunächst eine Phase der Kommunikation im CRM-Modus zwischen dem Master und dem Slave statt, im Rahmen derer der Slave üblicherweise konfiguriert wird, beispielsweise in Hinblick auf die Parameter des oben genannten PDCM-Zeitschlitzes dieses Slaves. Ist diese Phase abgeschlossen, so geht die Sensoranordnung in den PCDM-Modus über, in dem immer in Reaktion auf das Synchronisierungssignal des Masters die Slaves die erfassten Daten im jeweils zugeordneten Zeitschlitz an die Zentralinstanz senden. Diese Phase im PDCM-Modus wird üblicherweise nicht mehr verlassen, bis der Betrieb der Sensoranordnung unterbrochen wird. Eine Power-Phase ist gemäß Signal Function Class nicht vorgesehen und aufgrund des geringen Energiebedarfs der Slaves auch nicht erforderlich.

Die oben genannte Power Function Class dient primär der Anbindung von Slaves mit vergleichsweise hohem Energiebedarf und vergleichsweise geringem Datenaufkommen, das von dem Master zum Slave zu senden ist. Im Betrieb einer Sensoranordnung der Power Function Class finden im Wechsel einerseits Phasen der Kommunikation zwischen dem Master und dem Slave im CRM-Modus sowie andererseits Power-Phasen statt. Dabei überwiegen zeitlich üblicherweise die Power-Phasen deutlich. Durch die Speisung der Slaves in diesen Phasen mit vergleichsweise viel Energie bei, verglichen mit dem CRM-Modus, höherer Spannung können insbesondere Aktoren betrieben werden, wobei dies üblicherweise auf Basis von zuvor in der CRM-Phase von dem Master an die Slaves übertragenen Steuerbefehlen erfolgt. Der PDCM-Modus findet gemäß Power Function Class keine Anwendung, da er bei den genannten Aktoren aufgrund des geringen Datenaufkommens auch nicht erforderlich ist.

Im PDCM-Modus folgt die Datenübertragung einem festen, vom Master vorgegebenen Schema. Dabei wird in der Regel jedem Slave ein fester Zeitschlitz zugewiesen, also eine relativ zu einem vom Master ausgesandten Synchronisationssignal vorgegebene Zeitdauer, in der vom jeweiligen Slave Daten an den Master zu übertragen sind.

In der WO 2016/054345 A1 ist ein Ultraschallsystem zum Überwachen des Zustands oder der Integrität einer Struktur, wie z. B. in der Öl-, Gas- oder Energieerzeugungswirtschaft genutzt, beschrieben. Das System umfasst eine Mehrzahl von Ultraschallsensoren und wenigsten ein Digital Sensor Interface.

Die DE 10 2013 226 376 A1 beschreibt ein Verfahren zum Betreiben eines Sensorsystem mit einem Ultraschallsensor und einem Steuergerät, wobei Daten von dem Ultraschallsensor an das Steuergerät strommoduliert und Daten von dem Steuergerät zum Ultraschallsensor spannungsmoduliert übertragen werden. Durch diese Lösung können nach Modifikation einer entsprechenden PSI5-Datenbus-Schnittstelle eben dieser Datenbus und ein LIN-Datenbus zur Datenübertragung zur Ausnutzung der Vorteile der beiden Bussystem miteinander kombiniert werden.

In der DE 10 2012 103 907 A1 ist ein Verfahren zum Betrieb einer Empfangseinheit eines mit einer Sendeeinheit verbundenen Kraftfahrzeugsteuergeräts beschrieben. Die Empfangseinheit fügt dem empfangenen Signal eine Kennung hinzu, welche eine virtuelle Adresse der Sendeeinheit enthält. Dies kann verwendet werden, um eine Sensoreinheit nach dem PSI5-Version1-Standard an ein Kraftfahrzeugsteuergerät anzuschließen, das Signale im PSI-Version2-Standard verarbeitet.

Die EP 2 263 102 B1 beschreibt schließlich ein ultraschallbasiertes Fahrerassistenzsystem mit mehreren Sensoren. Die Sensoren sind jeweils mit einem individuellen Identifikationscode belegt, der über eine Schnittstelle von einem Steuergerät auslesbar ist. Die Schnittstelle ist eine 2-Draht-Bussschnittstelle, die nach einer Periphere Sensor Schnittstelle (Peripheral Sensor Interface PSI) ausgebildet ist. Die DE 10 2010 002 679 A1 beschreibt ein Verfahren zur Versorgung mindestens eines Busteilnehmers durch ein Steuergerät, bei dem an mindestens einen Busteilnehmer während mindestens einer Phase zur Datenübertragung Daten übertragen werden und während mindestens einer Phase zur Energieübertragung Energie übertragen wird, wobei die Phasen zur Datenüberragung und Energieübertragung abwechselnd mit variablen Längen bereitgestellt werden.

Es ist die Aufgabe der Erfindung, ein derartiges Verfahren zum Betreiben einer Sensoranordnung in einem Kraftfahrzeug auf Basis eines DSI-Protokolls anzugeben, bei dem eine Kommunikation zwischen dem Master und den Slaves regelmäßig mit einer hohen Bandbreite möglich ist.

Diese Aufgabe wird durch die Gegenstände der unabhängigen Patentansprüche gelöst. Bevorzugte Weiterbildungen der Erfindungen sind in den Unteransprüchen beschrieben.

Erfindungsgemäß ist somit ein Verfahren zum Betreiben einer Sensoranordnung in einem Kraftfahrzeug auf Basis eines DSI-Protokolls vorgesehen, wobei
- die Sensoranordnung eine Zentraleinheit als Master und eine Mehrzahl Sensoreinheiten als von dem Master gesteuerte Slaves aufweist,
- die Zentraleinheit und die Sensoreinheiten an eine Busleitung angeschlossen sind und
- über die Busleitung eine Kommunikation zwischen der Zentraleinheit und den Sensoreinheiten mit folgenden Schritten erfolgt:
- einander abwechselndes Durchführen einer Energieversorgungsphase einerseits und einer Kommunikationsphase andererseits, wobei die Energieversorgungsphase und die Kommunikationsphase jeweils für eine vorbestimmte Dauer aufrechterhalten werden,
- Versorgen der Sensoreinheiten mit elektrischer Energie in der Energieversorgungsphase so lange die Energieversorgungsphase andauert,
- wiederholtes Durchführen eines Kommunikationszyklus in der Kommunikationsphase so lange die Kommunikationsphase andauert mit den Schritten: Senden eines Kommandos von der Zentraleinheit an wenigstens eine Sensoreinheit, Empfangen wenigstens einer Antwort einer Sensoreinheit in der Zentraleinheit, Empfangen einer jeweiligen Energiestatusinformation von allen Sensoreinheiten in der Zentraleinheit und Unterbrechen des wiederholten Durchführens des Kommunikationszyklus in der Kommunikationsphase durch eine Zusatzenergieversorgungsphase, wenn wenigstens eine der von den Sensoreinheiten stammenden Energiestatusinformationen angibt, dass die entsprechende Sensoreinheit zum weiteren Betrieb zusätzlicher elektrischer Energie bedarf.

Es ist somit ein wesentlicher Aspekt der Erfindung, dass die Kommunikationsphase durch eine Zusatzenergieversorgungsphase unterbrochen werden kann, wenn die Gefahr besteht, dass eine Sensoreinheit ohne zusätzliche Energie keinen weiteren Kommunikationszyklus durchführen kann. Auf diese Weise kann die Dauer der Kommunikationsphasen länger gewählt werden als herkömmlich. Es muss nämlich nicht mehr für alle möglichen "Worst case"-Szenarien sichergestellt werden, dass die an die Sensoreinheiten übertragene Energie tatsächlich für die volle Dauer der Kommunikationsphase ausreichend ist. Im "Notfall" kann schließlich eine Unterbrechung der Kommunikationsphase durch eine Zusatzenergieversorgungsphase erfolgen, innerhalb derer zusätzlich erforderliche Energie übertragen wird. Damit bleibt mehr Zeit für die Kommunikationsphasen, womit verglichen mit herkömmlichen Lösungen eine Vergrößerung der Bandbreite für die Datenübertragung zwischen dem Master und den Slaves einhergehen kann.

Grundsätzlich ist es möglich, dass die Kommunikationsphase gar nicht oder nur einmalig für eine Zusatzenergieversorgungsphase unterbrochen wird. Gemäß einer bevorzugten Weiterbildung der Erfindung ist zusätzlich jedoch ein nochmaliges Unterbrechen des wiederholten Durchführens des Kommunikationszyklus in der Kommunikationsphase durch eine jeweilige Zusatzenergieversorgungsphase möglich, wenn wenigstens eine der von den Sensoreinheiten stammende Energiestatusinformationen angibt, dass die entsprechende Sensoreinheit zusätzlicher elektrischer Energie bedarf. Auch diesem nochmaligen Unterbrechen kann ein weiteres Unterbrechen für eine Zusatzenergieversorgungsphase folgen.

Erfindungsgemäß ist es nicht zwingend erforderlich, die Kommunikationsphase zu verlängern, wenn sie von einer Zusatzenergieversorgungsphase unterbrochen worden ist. Gemäß einer bevorzugten Weiterbildung der Erfindung ist jedoch vorgesehen, die vorbestimmte Dauer der Kommunikationsphase um die Dauer der Zusatzenergieversorgungsphase bzw. der Zusatzenergieversorgungsphasen zu verlängern. Auf diese Weise kann sichergestellt werden, dass tatsächlich die gesamte geplante Kommunikation zwischen dem Master und den Slaves abgewickelt werden kann, ohne dass Teile dieser Kommunikation auf eine spätere Kommunikationsphase verschoben werden müssen.

Gemäß einer bevorzugten Weiterbildung der Erfindung ist vorgesehen, dass das Auftreten der Zusatzenergieversorgungsphasen aufgezeichnet wird und die Dauer der Kommunikationsphasen sukzessive verlängert wird, so lange keine Zusatzenergieversorgungsphase auftritt. Eine derartige Verlängerung der Kommunikationsphasen verbessert die Bandbreite für die Kommunikation und kann deshalb "gewagt" werden, da wegen der möglichen Zusatzenergieversorgungsphasen ein Weiterbetrieb auch dann gewährleistet werden kann, wenn einer Sensoreinheit ansonsten nicht mehr genug Energie zur Verfügung stehen würde. Auf diese Weise kann der Zeitanteil, der für die Kommunikationsphasen zur Verfügung steht, vorzugsweise so weit vergrößert werden, dass gerade noch keine oder nur ganz selten Zusatzenergieversorgungsphasen erforderlich werden.

Es liegt im Rahmen der Erfindung, dass eine Sensoreinheit mittels ihrer Energiestatusinformation bereits einige Kommunikationszyklen vor dem Zeitpunkt, zu dem ihr nicht mehr ausreichend Energie für einen Weiterbetrieb zur Verfügung stehen würde, signalisiert, dass sie zusätzlicher elektrischer Energie bedarf. Vorzugsweise ist vorgesehen, dass eine Sensoreinheit mittels der Energiestatusinformation erst dann angibt, dass sie zusätzlicher elektrischer Energie bedarf, wenn die entsprechende Sensoreinheit nur noch weniger als eine vorbestimmte Anzahl von Kommunikationszyklen durchführen kann. Ganz besonders bevorzugt ist die vorbestimmte Anzahl von Kommunikationszyklen dabei 1. Auf diese Weise wird die den einzelnen Sensoreinheiten zur Verfügung stehende Energie maximal ausgenutzt, und es erfolgt erst dann eine Unterbrechung der Kommunikationsphase, wenn tatsächlich ansonsten ein Weiterbetrieb im Rahmen der Kommunikationsphase nicht mehr möglich wäre. Auch auf diese Weise wird eine besonders hohe Bandbreite der Datenübertragung zwischen dem Master und den Slaves erzielt.

Die Erfindung betrifft auch die Verwendung eines Verfahrens, wie zuvor beschrieben, in einem Kraftfahrzeug. Weiterhin betrifft die Erfindung eine Sensoranordnung, die zum Betrieb mittels eines Verfahrens, wie zuvor beschrieben, eingerichtet ist.

Insgesamt gilt für die Erfindung, dass die Sensoreinheiten und die Zentraleinheit über die Busleitung vorzugsweise in Serie miteinander verbunden sind, also in der sogenannten "Daisy Chain"-Konfiguration. Im Übrigen weisen die Sensoreinheiten gemäß einer bevorzugten Weiterbildung der Erfindung jeweils wenigstens einen Aktor der Power Function Class auf. Ganz besonders bevorzugt handelt es sich bei der Sensoranordnung insgesamt um einen Typ der Power Function Class. Vorzugsweise handelt es sich bei der Busleitung außerdem um eine Zweidrahtleitung. Außerdem ist vorzugsweise vorgesehen, dass die Sensoranordnung als Sensoreinheiten Ultraschallsensoreinheiten zum Senden und/oder Empfangen von Ultraschallsignal aufweist.

Nachfolgend wird die Erfindung unter Bezugnahme auf die Zeichnungen anhand bevorzugter Ausführungsbeispiele näher erläutert. Die dargestellten Merkmale können sowohl jeweils einzeln als auch in Kombination einen Aspekt der Erfindung darstellen. Es zeigen
- Fig. 1: schematisch ein Fahrzeug mit einer Sensoranordnung gemäß einem bevorzugten Ausführungsbeispiel der Erfindung mit einer Zentraleinheit als Master und drei Sensoreinheiten als Slaves in einer "Daisy Chain"-Konfiguration und
- Fig. 2: schematisch den zeitlichen Ablauf der Energieversorgungsphase, der Kommunikationsphase und der Zusatzenergieversorgungsphasen in verschiedenen Fallen gemäß einem bevorzugten Ausführungsbeispiel der Erfindung.

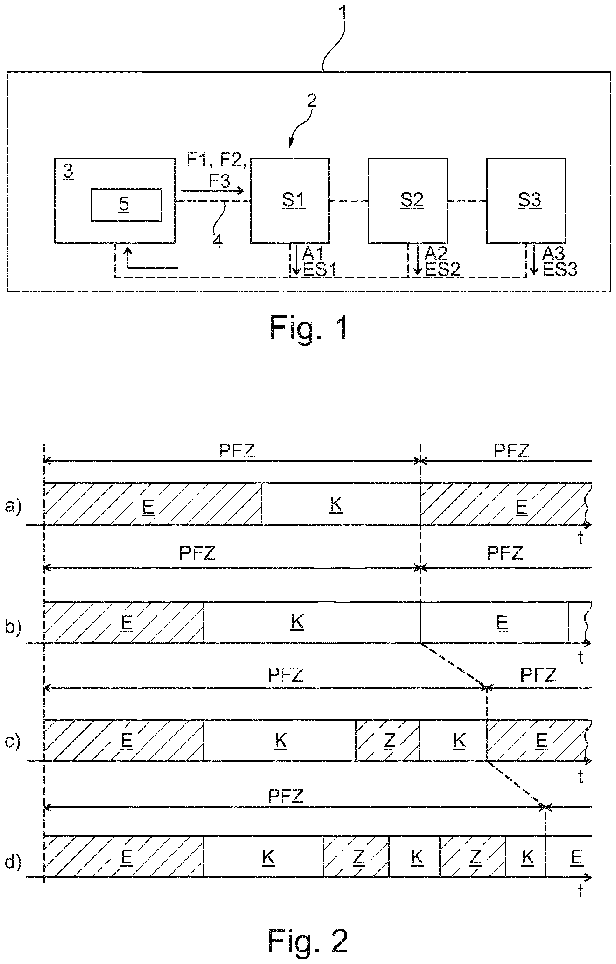

Aus Fig. 1 ist schematisch ein Fahrzeug 1 mit einer Sensoranordnung gemäß einem bevorzugt Ausführungsbeispiel der Erfindung gezeigt. Die Sensoranordnung 2 weist eine Zentraleinheit 3 und drei Sensoreinheiten S1, S2 und S3 auf. Der Master 3 und die Sensoreinheiten S1, S2, S3 sind mittels einer Busleitung 4 miteinander verbunden, die als Zweidrahtleitung ausgebildet ist. Dabei gilt weiterhin, dass die drei Sensoreinheiten S1, S2, S3 mit der Zentraleinheit 3 in Serie miteinander verbunden sind, also in einer sogenannten "Daisy Chain"-Konfiguration.

Die Zentraleinheit 3 stellt im Sinne der oben genannten DSI3-Spezifikation einen Master dar, der über die Busleitung 4 mit den drei im Sinne der DSI3-Spezifikation als Slaves fungierenden Sensoreinheiten S1, S2, S3 verbunden ist, so dass insgesamt ein Bus im Sinne der DSI3-Spezifikation vorliegt. Des Weiteren handelt es sich bei den Sensoreinheiten S1, S2, S3, um Sensoreinheiten mit Aktoren, die einen vergleichsweise hohen Energiebedarf haben und daher unter die oben genannte Power Function Class fallen. Wie eingangs schon erläutert, finden somit im Betrieb der vorliegenden Sensoranordnung 2 der Power Function Class im Wechsel einerseits Energieversorgungsphasen und andererseits Kommunikationsphasen statt, wie im Detail im Folgenden anhand von Fig. 2 beschrieben.

Fig. 2 zeigt in vier unterschiedlichen Fällen a) bis d) den Ablauf von Power Function-Zyklen PFZ, die jeweils wiederholt werden und sowohl eine Energieübertragung von der Zentraleinheit 3 an die Sensoreinheiten S1, S2, S3, sowie eine Kommunikation zwischen der Zentraleinheit 3 und den Sensoreinheiten S1, S2, S3 umfassen. In dem Fall a) erfolgt eine relativ lange Energieversorgungsphase E, in der von der Zentraleinheit 3 an die Sensoreinheiten S1, S2, S3 Energie übertragen wird. Während dieser Energieversorgungsphase findet keine Kommunikation zwischen der Zentraleinheit 3 und den Sensoreinheiten S1, S2, S3 statt.

Auf die Energieversorgungsphase E folgt eine Kommunikationsphase K, innerhalb derer eine Kommunikation zwischen der Zentraleinheit 3 und den Sensoreinheiten S1, S2, S3 durchgeführt wird. Während dieser Kommunikationsphase findet keine Versorgung der Sensoreinheiten S1, S2, S3 mit Energie statt. Antworten A1, A2, A3 jeweils auch Energiestatusinformationen ES1, ES2, ES3 auf den Bus gegeben. In dieser Kommunikationsphase sendet, wie aus Fig. 1 ersichtlich, die Zentraleinheit 3 Kommandos F1, F2, F3, wie Fragen, an die Sensoreinheiten S1, S2, S3, die darauf hin mit Antworten A1, A2, A3 antworten, die an die Zentraleinheit 3 gesandt und von dieser empfangen werden. Mit dem Ende der Kommunikationsphase K endet auch der Power Function-Zyklus PFZ und es beginnt ein neuer identischer Power Function-Zyklus PFZ mit einer neuen Energieversorgungsphase E.

In dem Fall a) ist die Dauer der Energieversorgungsphasen E so groß, so dass genügend Energie an die Sensoreinheiten S1, S2, S3 übertragen werden kann, damit diesen während der Kommunikationsphase K immer genügend Energie zur Verfügung steht. Ein Betrieb während der gesamten Kommunikationsphase K ist also sichergestellt, ohne dass den Sensoreinheiten S1, S2, S3, in dieser Zeit zusätzliche Energie zur Verfügung gestellt werden muss. Grundsätzlich sieht das vorliegend beschriebene Verfahren zum Betreiben der Sensoranordnung 2 jedoch vor, dass eine Kommunikationsphase K unterbrochen werden kann, um dann in einer Zusatzenergieversorgungsphase Z zusätzliche Energie an derartige Sensoreinheiten S1, S2, S3 zu übertragen, die zusätzliche Energie benötigen, um weiter betrieben werden können.

Dazu werden von den Sensoreinheiten S1, S2, S3 außer ihren schon oben beschriebenen Antworten A1, A2, A3 jeweils auch Energiestatusinformationen ES1, ES2, ES3 auf den Bus gegeben. Diese Energiestatusinformationen ES1, ES2, ES3 geben an, ob die jeweilige Sensoreinheit S1, S2, S3 zum weiteren Betrieb zusätzlicher elektrischer Energie bedarf oder nicht. Konkret ist gemäß dem vorliegend beschriebenen bevorzugten Ausführungsbeispiel der Erfindung vorgesehen, dass eine Energiestatusinformation ES1, ES2, ES3 einer jeweiligen Sensoreinheit S1, S2, S3 angibt, dass die entsprechende Sensoreinheit S1, S2, S3 zum weiteren Betrieb zusätzlicher elektrischer Energie bedarf, wenn tatsächlich kein weiterer Kommunikationszyklus innerhalb der laufenden Kommunikationsphase K mehr möglich wäre, ohne dass die entsprechende Sensoreinheit S1, S2, S3 vorher mit zusätzlicher elektrischer Energie versorgt wird. In der Zentraleinheit 3 werden diese Energiestatusinformation ES1, ES2, ES3 von einem Energiestatusmonitor 5 erfasst und ausgewertet, um ggf. eine Zusatzenergieversorgungsphasen Z einzuleiten.

Vorliegend wird nun das Auftreten von Zusatzenergieversorgungsphasen Z aufgezeichnet, um die Dauer der Energieversorgungsphasen E derart anzupassen, dass die Wahrscheinlichkeit für das Auftreten wenigstens einer Zusatzenergieversorgungsphase Z größer Null ist. Da im Fall a) keine Zusatzenergieversorgungsphasen Z erfolgt sind, ist im Fall b) nun die Energieversorgungsphase E gegenüber der Fall a) verkürzt. Auf diese Weise steht eine größere Zeitdauer für die Kommunikationsphase K zur Verfügung, ohne dass sich der Power Function-Zyklus PFZ verlängert. Bei dem Betrieb der Sensoreinheiten S1, S2, S3 in der Fall b) reicht die in der Energieversorgungsphase E übertragene Energie immer noch aus, um die komplette Dauer der Kommunikationsphase K durchzustehen, ohne dass die Sensoreinheiten S1, S2, S3 weiterer Energie bedürfen. Daher könnte grundsätzlich eine weitere Verkürzung der Energieversorgungsphase E erfolgen. Ändert sich jedoch der Betrieb der Sensoreinheiten S1, S2, S3 mag sich das anders darstellen, wie nachfolgen für Fall c) erläutert.

Im Fall c) ist es nun so, dass bei gleicher Dauer der Energieversorgungsphase E und damit derselben übertragenen Energie an die Sensoreinheiten S1, S2, S3 aufgrund eines unterschiedlichen Betriebs der Sensoreinheiten S1, S2, S3 die Energie wenigstens einer Sensoreinheit S1, S2, S3 nicht ausreicht, um die komplette Dauer der Kommunikationsphase K durchzustehen. Auf das entsprechende Senden einer Energiestatusinformation ES1, ES2, ES3 von einer der Sensoreinheiten S1, S2, S3 hin, dass für den weiteren Betrieb der entsprechenden Sensoreinheit S1, S2, S3 zusätzliche Energie benötigt wird, wird daraufhin die Kommunikationsphase K durch eine Zusatzenergieversorgungsphase Z unterbrochen. In dieser Zusatzenergieversorgungsphase Z werden die Sensoreinheiten S1, S2, S3 mit zusätzlicher Energie versorgt, so dass sie weiter betrieben werden können und die Kommunikationsphase K im Anschluss abgeschlossen werden kann.

Die gesamte Kommunikationsphase K, einschließlich ihrer Unterbrechung durch die Zusatzenergieversorgungsphase Z, ist somit um gerade die Dauer dieser Zusatzenergieversorgungsphase Z verlängert, so dass sich auch ein Power Function-Zyklus PFZ ergibt, der gerade um die Dauer der Zusatzenergieversorgungsphase Z zeitlich verlängert ist. Diese Verlängerung des Power Function-Zyklus PFZ um die Dauer der Zusatzenergieversorgungsphase Z ermöglicht es, die Kommunikation zwischen der Zentraleinheit 3 und den Sensoreinheiten S1, S2, S3 so abzuschließen, wie in einem regulären Fall, in dem es zu keiner Unterbrechung der Kommunikationsphase K gekommen wäre.

In Fall d) ist schließlich gezeigt, dass es auch zu einem mehrfachen Unterbrechen der Kommunikationsphase K kommen kann. Vorliegend kommt es zu zwei Unterbrechungen durch eine jeweilige Zusatzenergieversorgungsphase Z, um den Weiterbetrieb der Sensoreinheiten S1, S2, S3 sicherzustellen. Auch hier wird der Power Function-Zyklus PFZ insgesamt um die gesamte Dauer der Zusatzenergieversorgungsphasen Z verlängert, um eine vollständige Kommunikation der Zentraleinheit 3 mit den Sensoreinheiten S1, S2, S3 sicherzustellen.

### Bezugszeichenliste

- 1: Kraftfahrzeug
- 2: Sensoranordnung
- 3: Zentraleinheit
- 4: Busleitung
- 5: Energiestatusmonitor
- S1: Sensoreinheit
- S2: Sensoreinheit
- S3: Sensoreinheit
- E: Energieversorgungsphase
- K: Kommunikationsphase
- Z: Zusatzenergieversorgungsphase
- F1: Kommando
- F2: Kommando
- F3: Kommando
- A1: Antwort
- A2: Antwort
- A3: Antwort
- ES1: Energiestatusinformation
- ES2: Energiestatusinformation
- ES3: Energiestatusinformation
- PFZ: Power Function-Zyklus

## Patentansprüche

1. Verfahren zum Betreiben einer Sensoranordnung (2) in einem Kraftfahrzeug (1) auf Basis eines DSI-Protokolls, wobei
- die Sensoranordnung (2) eine Zentraleinheit (3) als Master und eine Mehrzahl Sensoreinheiten (S1, S2, S3) als von dem Master gesteuerte Slaves aufweist,
- die Zentraleinheit (3) und die Sensoreinheiten (S1, S2, S3) an eine Busleitung (4) angeschlossen sind und
- über die Busleitung (4) eine Kommunikation zwischen der Zentraleinheit (3) und den Sensoreinheiten (S1, S2, S3) mit folgenden Schritten erfolgt:
- einander abwechselndes Durchführen einer Energieversorgungsphase (E) einerseits und einer Kommunikationsphase (K) andererseits, wobei die Energieversorgungsphase (E) und die Kommunikationsphase (K) jeweils für eine vorbestimmte Dauer aufrechterhalten werden,
- Versorgen der Sensoreinheiten (S1, S2, S3) mit elektrischer Energie in der Energieversorgungsphase (E) so lange die Energieversorgungsphase (E) andauert,
- wiederholtes Durchführen eines Kommunikationszyklus in der Kommunikationsphase (K) so lange die Kommunikationsphase (K) andauert mit den Schritten: Senden eines Kommandos (F1, F2, F3) von der Zentraleinheit (3) an wenigstens eine Sensoreinheit (S1, S2, S3), Empfangen wenigstens einer Antwort (A1, A2, A3) einer Sensoreinheit (S1, S2, S3) in der Zentraleinheit (3), Empfangen einer jeweiligen Energiestatusinformation (ES1, ES2, ES3) von allen Sensoreinheiten (S1, S2, S3) in der Zentraleinheit (3) und Unterbrechen des wiederholten Durchführens des Kommunikationszyklus in der Kommunikationsphase (K) durch eine Zusatzenergieversorgungsphase (Z), wenn wenigstens eine der von den Sensoreinheiten (S1, S2, S3) stammenden Energiestatusinformationen (ES1, ES2, ES3) angibt, dass die entsprechende Sensoreinheit (S1, S2, S3) zum weiteren Betrieb zusätzlicher elektrischer Energie bedarf.

2. Verfahren nach Anspruch 1 mit den Schritten:
- nochmaliges Unterbrechen des wiederholten Durchführens des Kommunikationszyklus in der Kommunikationsphase (K) durch eine jeweilige Zusatzenergieversorgungsphase (Z), wenn wenigstens eine der von den Sensoreinheiten (S1, S2, S3) stammende Energiestatusinformationen (ES1, ES2, ES3) angibt, dass die entsprechende Sensoreinheit (S1, S2, S3) zusätzlicher elektrischer Energie bedarf.

3. Verfahren nach einem der vorherigen Ansprüche mit dem zusätzlichen Schritt:
- Verlängern der vorbestimmten Dauer der Kommunikationsphase (K) um die Dauer der Zusatzenergieversorgungsphase (Z) bzw. der Zusatzenergieversorgungsphasen (Z).

4. Verfahren nach einem der vorherigen Ansprüche mit den zusätzlichen Schritten:
- Aufzeichnen des Auftretens der Zusatzenergieversorgungsphasen (Z),
- Anpassen der Dauer der Energieversorgungsphasen (E) derart, dass die Wahrscheinlichkeit für das Auftreten wenigstens einer Zusatzenergieversorgungsphase (Z) größer Null ist.

5. Verfahren nach einem der vorherigen Ansprüchen, mit dem folgenden Schritt:
- Angeben mittels der Energiestatusinformation (ES1, ES2, ES3), dass eine Sensoreinheit (S1, S2, S3) zusätzlicher elektrischer Energie bedarf, wenn die entsprechende Sensoreinheit (S1, S2, S3) nur noch weniger als eine vorbestimmte Anzahl von Kommunikationszyklen durchführen kann.

6. Verfahren nach Anspruch 5, wobei die vorbestimmte Anzahl von Kommunikationszyklen 1 beträgt.

7. Verwendung eines Verfahrens nach einem der vorhergehenden Ansprüche in einem Kraftfahrzeug (1).

8. Sensoranordnung, die zum Betrieb mittels eines Verfahrens nach einem der Ansprüche 1 bis 6 eingerichtet ist,
wobei die Sensoranordnung (2) eine Zentraleinheit (3) als Master und eine Mehrzahl Sensoreinheiten (S1, S2, S3) als von dem Master gesteuerte Slaves aufweist,
und die Zentraleinheit (3) und die Sensoreinheiten (S1, S2, S3) an eine Busleitung (4) angeschlossen sind, wobei die Sensoranordnung als Sensoreinheiten (S1, S2, S3) Ultraschallsensoreinheiten zum Senden und/oder Empfangen von Ultraschallsignalen aufweist, und einen Energiestatusmonitor (5) aufweist, mit dem auf den Empfang der von den Sensoreinheiten (S1, S2, 3) stammenden Energiestatusinformationen hin die Kommunikationsphase (K) durch eine Zusatzenergieversorgungsphase (Z) unterbrechbar ist.

## Claims

1. Method for operating a sensor arrangement (2) in a motor vehicle (1) on the basis of a DSI protocol, wherein
- the sensor arrangement (2) has a central unit (3) as a master and a plurality of sensor units (S1, S2, S3) as slaves controlled by the master,
- the central unit (3) and the sensor units (S1, S2, S3) are connected to a bus cable (4), and
- communication takes place between the central unit (3) and the sensor units (S1, S2, S3) via the bus cable (4) with the following steps:
- alternately performing an energy supply phase (E), on the one hand, and a communication phase (K), on the other hand, wherein the energy supply phase (E) and the communication phase (K) are each maintained for a predetermined duration,
- supplying the sensor units (S1, S2, S3) with electrical energy in the energy supply phase (E) as long as the energy supply phase (E) continues,
- repeatedly performing a communication cycle in the communication phase (K) as long as the communication phase (K) continues, with the following steps: sending a command (F1, F2, F3) from the central unit (3) to at least one sensor unit (S1, S2, S3), receiving at least one response (A1, A2, A3) of a sensor unit (S1, S2, S3) in the central unit (3), receiving a respective energy status information item (ES1, ES2, ES3) from all sensor units (S1, S2, S3) in the central unit (3) and interrupting the repeated performance of the communication cycle in the communication phase (K) by a supplementary energy supply phase (Z) if at least one of the energy status information items (ES1, ES2, ES3) originating from the sensor units (S1, S2, S3) indicates that the corresponding sensor unit (S1, S2, S3) requires additional electrical energy for continued operation.

2. Method according to Claim 1, with the following steps:
- interrupting once more the repeated performance of the communication cycle in the communication phase (K) by a respective supplementary energy supply phase (Z), if at least one of the energy status information items (ES1, ES2, ES3) originating from the sensor units (S1, S2, S3) indicates that the corresponding sensor unit (S1, S2, S3) requires additional electrical energy.

3. Method according to any one of the preceding claims, with the following additional step:
- extending the predetermined duration of the communication phase (K) by the duration of the supplementary energy supply phase (Z) or the supplementary energy supply phases (Z).

4. Method according to any one of the preceding claims, with the following additional steps:
- recording the occurrence of the supplementary energy supply phases (Z),
- adjusting the duration of the energy supply phases (E) in such a way that the probability of the occurrence of at least one supplementary energy supply phase (Z) is greater than zero.

5. Method according to any one of the preceding claims, with the following step:
- specifying by means of the energy status information (ES1, ES2, ES3) that a sensor unit (S1, S2, S3) requires additional electrical energy, if the corresponding sensor unit (S1, S2, S3) can only perform fewer than a predetermined number of communication cycles.

6. Method according to Claim 5, wherein the predetermined number of communication cycles is equal to 1.

7. Use of a method according to any one of the preceding claims in a motor vehicle (1).

8. Sensor arrangement which is configured for operation by means of a method according to any one of Claims 1 to 6,
wherein the sensor arrangement (2) has a central unit (3) as a master and a plurality of sensor units (S1, S2, S3) as slaves controlled by the master, and the central unit (3) and the sensor units (S1, S2, S3) are connected to a bus cable (4), wherein the sensor arrangement has ultrasonic sensor units for sending and/or receiving ultrasonic signals as sensor units (S1, S2, S3) and has an energy status monitor (5), with which, in response to the reception of the energy status information originating from the sensor units (S1, S2, 3), the communication phase (K) can be interrupted by a supplementary energy supply phase (Z) .

## Revendications

1. Procédé de fonctionnement d'un ensemble de capteurs (2) d'un véhicule automobile (1) sur la base d'un protocole DSI,
- l'ensemble de capteurs (2) comportant une unité centrale (3) en tant que maître et une pluralité d'unités formant capteurs (S1, S2, S3) en tant qu'esclaves commandés par le maître,
- l'unité centrale (3) et les unités formant capteurs (S1, S2, S3) étant raccordées à une ligne de bus (4) et
- une communication entre l'unité centrale (3) et les unités formant capteurs (S1, S2, S3) étant établie par le biais de la ligne de bus (4) avec les étapes suivantes :
- réaliser de manière alternée une phase d'alimentation en énergie (E) d'une part et une phase de communication (K) d'autre part, la phase d'alimentation en énergie (E) et la phase de communication (K) étant maintenues chacune pendant une durée prédéterminée,
- alimenter les unités formant capteurs (S1, S2, S3) en énergie électrique dans la phase d'alimentation en énergie (E) tant que dure la phase d'alimentation en énergie (E),
- réaliser de manière répétée un cycle de communication dans la phase de communication (K), tant que dure la phase de communication (K), avec les étapes suivantes : envoyer une commande (F1, F2, F3) de l'unité centrale (3) à au moins un unité formant capteur (S1, S2, S3), recevoir au moins une réponse (A1, A2, A3) d'une unité formant capteur (S1, S2, S3) dans l'unité centrale (3), recevoir une information d'état d'énergie respective (ES1, ES2, ES3) de toutes les unités formant capteurs (S1, S2, S3) de l'unité centrale (3) et interrompre la réalisation répétée du cycle de communication dans la phase de communication (K) par une phase d'alimentation en énergie supplémentaire (Z) si au moins une des informations d'état d'énergie (ES1, ES2, ES3) provenant des unités formant capteurs (S1, S2, S3) indique que l'unité formant capteur correspondante (S1, S2, S3) nécessite de l'énergie électrique supplémentaire pour le fonctionnement ultérieur.

2. Procédé selon la revendication 1 comprenant les étapes suivantes :
- interrompre à nouveau la réalisation répétée du cycle de communication dans la phase de communication (K) par une phase d'alimentation en énergie supplémentaire respective (Z) si au moins une des informations d'état d'énergie (ES1, ES2, ES3) provenant des unités formant capteurs (S1, S2, S3) indique que l'unité formant capteur correspondante (S1, S2, S3) nécessite de l'énergie électrique supplémentaire.

3. Procédé selon l'une des revendications précédentes comprenant l'étape supplémentaire :
- prolonger la durée prédéterminée de la phase de communication (K) de la durée de la phase d'alimentation en énergie supplémentaire (Z) ou des phases d'alimentation en énergie supplémentaire (Z).

4. Procédé selon l'une des revendications précédentes comprenant les étapes supplémentaires :
- enregistrer l'occurrence des phases d'alimentation en énergie supplémentaire (Z),
- adapter la durée des phases d'alimentation en énergie (E) de telle sorte que la probabilité d'occurrence d'au moins une phase d'alimentation en énergie supplémentaire (Z) est supérieure à zéro.

5. Procédé selon l'une des revendications précédentes, comprenant l'étape suivante :
- utiliser l'information sur l'état d'énergie (ES1, ES2, ES3) pour indiquer qu'une unité formant capteur (S1, S2, S3) nécessite de l'énergie électrique supplémentaire si l'unité formant capteur correspondante (S1, S2, S3) ne peut réaliser que moins d'un nombre prédéterminé des cycles de communication.

6. Procédé selon la revendication 5, le nombre prédéterminé de cycles de communication est de 1.

7. Utilisation d'un procédé selon l'une des revendications précédentes dans un véhicule automobile (1) .

8. Ensemble de capteurs qui fonctionne au moyen d'un procédé selon l'une des revendications 1 à 6, l'ensemble de capteurs (2) comportant une unité centrale (3) en tant que maître et une pluralité d'unités formant capteurs (S1, S2, S3) en tant qu'esclaves commandés par le maître, et l'unité centrale (3) et les unités formant capteurs (S1, S2, S3) étant raccordées à une ligne de bus (4), l'ensemble de capteurs comportant comme unités formant capteurs (S1, S2, S3) des unités formant capteurs à ultrasons destinées à émettre et/ou recevoir des signaux ultrasoniques, et un moniteur d'état d'énergie (5) permettant d'interrompre la phase de communication (K) par une phase d'alimentation en énergie supplémentaire (Z) à la réception des informations d'état d'énergie provenant d'unités formant capteurs (S1, S2, S3).
